Europäisches Patentamt

(19) **European Patent Office**

**Office européen des brevets**

(11) Numéro de publication: **0 072 464**
**B1**

(12) # FASCICULE DE BREVET EUROPEEN

(45) Date de publication du fascicule du brevet:
02.10.85

(51) Int. Cl.⁴: **B 60 K 20/12**, G 05 G 9/18

(21) Numéro de dépôt: **82106824.4**

(22) Date de dépôt: **28.07.82**

(54) **Dispositif manuel de commande de passage des rapports d'une boîte de vitesses.**

(30) Priorité: **14.08.81 FR 8115745**

(43) Date de publication de la demande:
**23.02.83 Bulletin 83/8**

(45) Mention de la délivrance du brevet:
**02.10.85 Bulletin 85/40**

(84) Etats contractants désignés:
**BE DE GB IT NL SE**

(56) Documents cités:
**DE - A - 3 002 968**
**FR - A - 2 022 743**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Lamy, Jean-Michel, 9 Villa Brune,**
**F-75012 Paris (FR)**
Inventeur: **Boutant, Jean-Jacques, 44, rue Charles Drot,**
**F-92500 Reuil Malmaison (FR)**

(74) Mandataire: **Casalonga, Axel et al, BUREAU D.A.**
**CASALONGA OFFICE JOSSE & PETIT**
**Baaderstrasse 12-14, D-8000 München 5 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention a pour object un dispositif manuel permettant la commande du passage des rapports de vitesse d'une boîte de vitesses de véhicule automobile, comprenant un levier de commande à actionnement manuel articulé autour d'un point fixe et transmettant le mouvement auquel il est soumis à un doigt de passage des vitesses monté à l'intérieur de la boîte de vitesses, par l'intermédiaire d'une tringlerie de commande comprenant notamment une bielle de passage de vitesses disposée entre la boîte de vitesses et le levier manuel.

Pour commander les rapports de vitesse d'une boîte de vitesses de véhicule automobile, il est nécessaire d'effectuer une démultiplication convenable des mouvements du levier de commande manuel. Il convient également d'atténuer par un découplage convenable les répercusions des mouvements du moteur du véhicule sur le dispositif de commande de la boîte de vitesses. Enfin, il est nécessaire de filtrer les vibrations dues aux bruits du moteur transmis par le dispositif de commande.

Pour résoudre ces problèmes, on utilise en général un levier de commande manuel placé dans l'habitacle du véhicule et articulé de façon à entraîner une démultiplication importante, de l'ordre de 4 à 5. La démultiplication totale recherchée, qui est en général de l'ordre de 6 à 7, est donc effectuée à 90% par le levier de commande manuel lui-même.

Du fait de l'importance de cette démultiplication au départ de la commande manuelle, le reste de la chaîne cinématique du dispositif de commande transmet un effort important, ce qui entraîne des pertes d'effort et une usure notable des différents éléments constitutifs. Il en résulte un mauvais rendement et une mauvaise fiabilité des dispositifs de commande de type classique.

Pour filtrer les vibrations de moteur, on dispose en général des éléments élastiques en un ou plusieurs points de la chaîne cinématique; ces éléments travaillent cependant dans de mauvaises conditions du fait de l'effort important à transmettre dû à la démultiplication effectuée par le levier manuel. Il en résulte des déplacements parasites importants et un mauvais rendement en déplacement des différents éléments de la commande. De plus, les débattements du moteur se trouvent amplifiés par la démultiplication du levier manuel de commande.

On a déjà prévu d'utiliser, pour supprimer en partie ces inconvénients, une bielle de réaction reliant le point d'articulation du levier de commande manuel dans l'habitacle à la boîte de vitesses et cela dans le sens longitudinal du véhicule, c'est-à-dire dans le sens des efforts. On obtient ainsi la formation d'un parallélogramme entre la bielle de réaction, le levier de commande manuel et la tringlerie de transmission des mouvements du levier de commande. De plus, dans ces modes de réalisation de type connu, l'ensemble constitué par la bielle de réaction et le levier de commande manuel est suspendu élastiquement au moyen de blocs de filtrage des vibrations reliés au plancher du véhicule. On évite ainsi de lier rigidement le levier de commande au plancher du véhicule ce qui perment de filtrer les vibrations du moteur par rapport au plancher du véhicule et donc par rapport à l'habitacle, en supprimant les éléments souples de filtrage habituellement montés à l'intérieur même de la chaîne cinématique.

Toutefois, cette amélioration des solutions classiques entraîne d'autres inconvénients compte tenu du poids de l'ensemble, de son encombrement et des pièces supplémentaires qu'il est nécessaire de prévoir et qui entraînent une augmentation des coûts.

On connaît également par la demande de brevet allemand DE 3 002 968 un dispositif de commande l'une boîte de vitesse dans lequel la bielle de passage est articulée sur un élément d'appui et agit, par l'intermédiaire d'une rotule, directement sur le levier de sortie de la boîte de vitesses. Dans ce document cependant le majeure partie de la démultiplication est due au levier manuel de commande.

La présente invention a pour objet de résoudre de manière simple les principaux problèmes évoqués précédemment, en réalisant un dispositif de commande de passage des rapports de vitesse dans lequel la démultiplication due au levier est faible, tandis que la majeure partie de la démultiplication nécessaire est réalisée en fin de chaîne cinématique, c'est-à-dire au voisinage immédat ou en partie à l'intérieur de la boîte de vitesses.

L'invention a en outre pour objet un dispositif de commande dans lequel le filtrage des vibrations est réalisé au moyen d'éléments souples intégrés en parallèle par rapport à la chaîne cinématique c'est-à-dire en un seul point d'articulation, évitant ainsi pratiquement toute erreur angulaire ou de déplacement dans la chaîne cinématique.

Il devient donc possible d'obtenir un dispositif de commande présentant un poids réduit, un faible encombrement dû au faible nombre de pièces constitutives et permettant l'obtention d'un excellent rendement à la fois en effort et en déplacement.

Selon l'invention, le dispositif manuel de commande de passage des rapports de vitesse l'une boîte de vitesses de véhicule automobile comprend, comme connu de DE-A-3 002 968, un levier de commande à actionnement manuel muni d'un point d'articulation fixe par rapport au châssis ou à la caisse du véhicule, un doigt de passage des vitesses monté à l'intérieur de la boîte de vitesses et pouvant être soumis à un mouvement de rotation autour d'un axe de commande et à un mouvement de translation le long de l'axe de commande, et une bielle de passage reliée à l'une des de ses extrémités au levier de commande manuel afin de transmettre les mouvements du levier manuel au doigt de passage des vitesses, la bielle de passage étant liée au levier manuel par une articulation à un degré de liberté en rotation, et est caractérise en ce que la bielle de passage est liée à son autre extrémité à un dispositif de démultiplication monté au moins en partie dans la boîte de vitesses par une articulation à un degré de liberté en rotation, et en ce que le point d'articulation fixe du levier de commande manuel est placé sur ledit levier de façon que la démultiplication due au levier manuel soit de l'ordre de 1,5, l'ensemble du dispositif de commande entraînant quant à lui une démultiplication totale de l'ordre de 6 à 7. Dans ces conditions, on voit que la majeure partie de la démultiplication est réalisée par le dispositif de démultiplication se trouvant à proximité ou même en partie dans la boîte de vitesses.

Le dispositif de démultiplication comprend de préférence une biellette de démultiplication fixée sur la boîte de vitesses par l'intermédiaire d'une articulation à rotule et un levier de sortie solidaire de l'axe de commande du doigt de passage des vitesses et articulé en un point de la biellette de démultiplication. Le point d'articulation du levier de sortie sur la biellette de démultiplication peut être déplacé par coulissement pour obtenir la démultiplication recherchée.

La bielle de passage est de préférence reliée par une articulation à l'une des extrémités de la biellette de démultiplication dont l'autre extrémité est fixée sur la boîte de vitesses par l'intermédiaire d'une articulation à rotule.

Pour filtrer les vibrations, le levier de commande manuel est de préférence monté sur le châssis ou la caisse du véhicule par l'intermédiaire d'une rotule et d'un bloc élastique.

Dans un mode de réalisation préféré, la bielle de passage est disposée sensiblement dans le sens longitudinal du véhicule, la biellette de démultiplication lui étant sensiblement orthogonale.

La presente invention sera mieux comprise à l'étude de la description détaillée d'un mode de réalisation pris à titre d'exemple nullement limitatif et illustré par les dessins annexés, sur lesquels:

la fig. 1 est une vue schématique en perspective des principaux éléments du dispositif de commande de l'invention;

la fig. 2 est une vue prise dans un plan vertical montrant les principaux éléments du dispositif de démultiplication et illustrant en particulier la sélection des lignes de vitesses; et

la fig. 3 est une vue schématique en coupe dans un plan horizontal montrant notamment le doigt de passage des vitesses et le levier de sortie de la boîte de vitesses lors d'un mouvement de commande de passage des vitesses dans une ligne donnée.

Tel qu'il est représenté sur les figures, le dispositif de commande de l'invention comprend un levier de commande à actionnement manuel 1 fixé au plancher du véhicule par l'intermédiaire d'une rotule 2 solidaire du plancher par l'intermédiaire d'un bloc élastique 3. De cette manière, le levier 1 se trouve donc articulé en un seul point fixe séparant le levier en une portion supérieure 1a et une portion inférieure 1b de longueur légèrement inférieure à la longueur de la partie supérieure 1a de façon à assurer une démultiplication de l'ordre de 1,5. A l'extrémité de la partie inférieure 1b du levier 1 se trouve monté un axe 4 disposé horizontalement coopérant avec les deux branches verticales d'une chape 5 montée à l'extrémité de la bielle de passage 6 laquelle se trouve disposée sensiblement selon une direction longitudinale à l'intérieur du véhicule entre le levier de commande manuel 1 et la boîte de vitesses non représentée sur la figure. On notera que le levier 1 est sensiblement vertical, tandis que la bielle de passage est sensiblement horizontale. De même, l'axe 4 sensiblement horizontal est disposé perpendiculairement à la bielle 6 c'est-à-dire transversalement à l'axe du véhicule.

A son autre extrémité, la bielle de passage 6 présente une autre chape 7 horizontale, coopérant avec une axe 8 sensiblement vertical solidaire de l'extrémité d'une biellette de démultiplication 9 fixée sur la boîte de vitesses schématisée par le plan fixe 10 par l'intermédiaire d'une articulation à rotule 11.

La commande du passage des vitesses à l'intérieur de la boîte de vitesses se fait au moyen d'un levier de commande ou doigt de passage 12 disposé à l'intérieur même de la boîte de vitesses et lié rigidement à un axe de commande 13. Le déplacement en translation de l'axe de commande 13 portant le doigt de passage 12 permet la sélection des lignes de vitesses tandis que la rotation de l'axe de commande 13 entraînant en rotation le doigt de passage 12 permet le passage d'une vitesse dans une ligne donnée. Ces différents mouvements sont commandés par le levier de sortie 14 comportant une portion coudée 15 fixée par une articulation 16 en un point déterminé de la biellette de démultiplication 9. La position de l'articulation 16 peut être modifiée en fonction de la démultiplication désirée, par coulissement le long de la biellette 9. La démultiplication totale du mouvement du levier manuel 1 dans la boîte de vitesses est donnée par le rapport entre la longueur du levier de sortie 14 de la boîte de vitesses et celle du doigt de passage 12 combinées avec la longueur totale de la biellette 9 et la longueur du segment de la biellette 9 compris entre l'articulation à rotule 11 et la position de l'articulation coulissante 16 c'est-à-dire la portion 9a de la biellette de démultiplication 9.

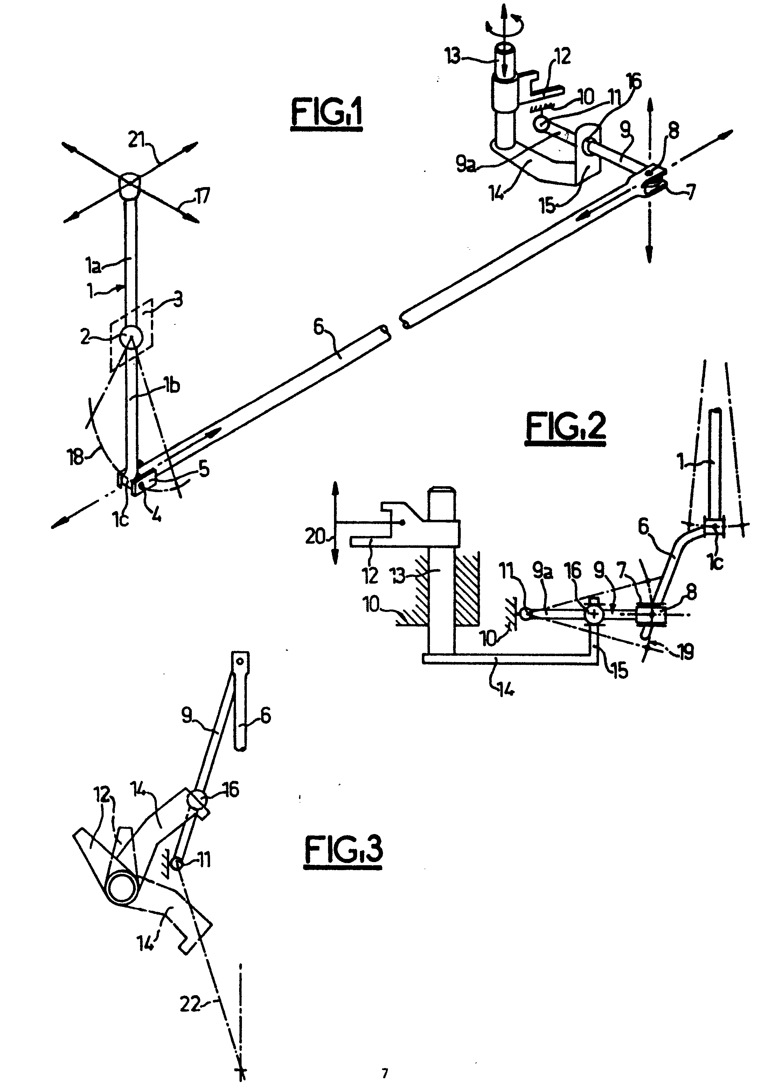

Le fonctionnement du dispositif manuel de commande de l'invention tel qu'il est illustré sur les figures se fait en deux temps. Un premier mouvement du levier manuel permet la sélection des différentes lignes de vitesses c'est-à-dire des positions alignées d'un certain nombre de rapports dans la boîte de vitesses et d'autre part un mouvement de passage des différentes vitesses dans une ligne donnée. A titre d'exemple dans la boîte de vitesses illustrée sur les figures, la sélection des lignes de vitesses se fait par un mouvement du levier manuel 1 transversalement à la direction longitudinale du véhicule selon l'axe référencé 17 sur la fig. 1. Une première ligne correspond par exemple à la marche arrière, une deuxième ligne correspond par exemple aux première et deuxième vitesses, une troisième ligne correspond par exemple aux troisième et quatrième vitesses et la quatrième ligne correspond par exemple à la cinquième vitesse de la boîte de vitesses. Le mouvement transversal du levier 1 se traduit par un mouvement angulaire de l'extrémité 1c de la portion 1b du levier 1 comme illustré par la portion de cercle en trait mixte 18 de la fig. 1.

Comme on peut le voir sur la fig. 2 qui représente cette opération de sélection d'une ligne de vitesses, l'extrémité 1c du levier manuel 1 se trouve déportée transversalement par rapport à l'extrémité libre de la biellette de démultiplication 9 compte tenu de la forme de la bielle de passage 6. Le mouvement angulaire de l'extrémité 1c du levier manuel 1 se traduit donc, grâce au point d'articulation à rotule 11 fixé sur la boîte de vitesses, par un déplacement également angulaire de la biellette de démultiplication 9 l'angle maximal de débattement étant visible en 19 sur la fig. 2. Le mouvement angulaire de la biellette de démultiplication 9 se traduit par un mouvement vertical de l'axe de commande 13 à l'intérieur de la boîte de vitesses 10. Ce mouvement est transmis par le levier de sortie 14 à travers l'articulation 16. Le doigt de passage 12 lié rigidement à l'axe de commande 13 se déplace donc verticalement dans la boîte de vitesses pour sélectionner une ligne de vitesse selon le mouvement illustré par la flèche 20 sur la fig. 2.

Le mouvement de passage des vitesses dans une ligne donnée se fait après l'opération de sélection précitée par un mouvement longitudinal du levier manuel 1. Ce mouvement est représenté par la flèche 21 sur la fig. 1 et il se traduit par un mouvement longitudinal de la bielle de passage 6. La bielle de passage 6 communique ce mouvement à la biellette de démultiplication 9 dans un plan qui a été déterminé par le mouvement de sélection préalable. La biellette 9 ayant un point fixe à rotule 11 dans la boîte de vitesses 10, le déplacement de la biellette 9 se fait selon un angle dont le débattement maximal est représenté par l'axe en trait mixte 22 sur la fig. 3. Le déplacement angulaire da la biellette 9 est communiqué à l'extrémité du levier de sortie 14 par l'intermédiaire de l'articulation 16. Le levier de sortie 14 est ainsi animé d'un déplacement angulaire en rotation autour de l'axe de commande 13, cette rotation étant communiquée au doigt de passage 12 par l'intermédiaire de l'axe 13. On a représenté sur la fig. 3, respectivement en trait plein et en trait mixte les deux positions extrêmes possibles du doigt de passage 12 et du levier de sortie 14.

La présente invention a été décrite en référence à un exemple d'illustration dans lequel les débattements pour le passage des vitesses et la sélection d'une ligne de vitesses se faisaient respectivement dans des plans horizontaux et verticaux. Bien entendu l'invention pourrait s'appliquer à d'autres dispositions de boîte de vitesses qui entraîneraient des déplacements dans d'autres plans.

On notera que la filtration des vibrations réalisée par le bloc élastique 3 se fait à l'endroit de la liaison du levier manuel 1 avec le plancher du véhicule de sorte que les déformations dues aux vibrations du moteur ne se trouvent pas amplifiées compte tenu de la faible démultiplication générée par le levier manuel lui-même.

## Revendications

1. Dispositif manuel de commande de passage des rapports de vitesse d'une boîte de vitesses de véhicule automobile, comprenant un levier de commande à actionnement manuel (1) muni d'un point d'articulation fixe (2), un doigt de passage des vitesses 12 monté à l'intérieur de la boîte de vitesses et pouvant être soumis à un mouvement de rotation autour d'un axe de commande (13) et un mouvement de translation le long dudit axe et une bielle de passage (6) reliée à l'une de ses extrémités par une articulation (4, 5) à un degré de liberté, au levier manuel (1) afin de transmettre les mouvements du levier manuel (1) au doigt de passage (12), caractérisé par le fait que la bielle de passage (6) est liée à son autre extrémité, par une articulation à un degré de liberté en rotation (7, 8) à un dispositif de démultiplication (9, 16, 14) monté au moins en partie dans la boîte de vitesses, le point d'articulation fixe (2) du levier manuel (1) étant placé sur ledit levier de façon que la démultiplication due au levier manuel soit de l'ordre de 1,5, l'ensemble du dispositif entraînant une démultiplication totale de l'ordre de 6 à 7.

2. Dispositif selon la revendication 1, caractérisé par le fait que le dispositif de démultiplication comprend une biellette de démultiplication (9) fixée sur la boîte de vitesses par l'intermédiaire d'une articulation à rotule (11) et un levier de sortie (14) solidaire de l'axe de commande (13) du doigt de passage (12), articulé en un point (16) réglable par coulissement sur la biellette de démultiplication (9).

3. Dispositif selon les revendications 1 ou 2, caractérisé par le fait que la bielle de passage (6) est reliée par une articulation (7, 8) à l'une des extrémités de la biellette de démultiplication (9) dont l'autre extrémité est fixée sur la boîte de vitesses par l'intermédiaire d'une articulation à rotule (11).

4. Dispositif selon l'une des revendications précédentes, caractérisé par le fait que le levier manuel (1) est monté sur le châssis ou la caisse du véhicule par l'intermédiaire d'une rotule (2) et d'un bloc élastique (3) de filtration des vibrations.

5. Dispositif selon d'une quelconque des revendications précédentes, caractérisé par le fait que la bielle de passage (6) est disposée sensiblement dans le sens longitudinal du véhicule, la biellette de démultiplication (9) lui étant sensiblement orthogonale.

6. Dispositif selon la revendication 5, caractérisé par le fait que l'extrémité du levier manuel (1) est déportée transversalement par rapport à l'extrémité de la bielle de démultiplication (9).

## Patentansprüche

1. Handsteuervorrichtung für die Gänge eines Wechselgetriebes eines Kraftfahrzeugs, enthaltend einen Handschalthebel (1) versehen mit einer festen Gelenkstelle (2), einen im Inneren des Wechselgetriebes montierten Schaltfinger (12), der um eine Schaltwelle (13) drehbar und entlang dieser genannten Welle verschiebbar ist, und eine Schaltstange (6), die an ihrem einen Ende mittels eines Gelenks (4, 5) mit einem Freiheitsgrad an den Handschalthebel (1) angelenkt ist, um die Bewegungen des Handschalthebels (1) auf den Schaltfinger (12) zu übertragen, dadurch gekennzeichnet, daß die Schaltstange (6) an ihrem anderen Ende mittels eines Drehgelenks mit einem Rotationsfreiheitsgrad (7, 8) an eine Untersetzungsvorrichtung (9, 16, 14) befestigt ist, die wenigstens teilweise im Wechselgetriebe montiert ist, wobei die feste Gelenkstelle (2) des Handschalthebels (1) so auf dem genannten Hebel liegt, daß die über den Handschalthebel (1) bewirkte Untersetzung in der Größenordnung von 1,5 liegt und die Vorrichtung insgesamt eine Gesamtuntersetzung in der Größenordnung 6 bis 7 bewirkt.

2. Vorrichtung gemäß Anspruch 1, dadurch gekennzeichnet, daß die Untersetzungsvorrichtung eine über ein Kugelgelenk (11) am Wechselgetriebe befestigte Untersetzungsstange (9) und einen mit der Steuerwelle (13) fest verbundenen Ausgangshebel (14) des Schaltfingers (12), der an einem durch Verschieben auf der Untersetzungsstange (9) regelbaren Punkt (16) angelenkt ist, umfaßt.

3. Vorrichtung gemäß Anspruch 1 oder 2, dadurch gekennzeichnet, daß die Schaltstange (6) über ein Gelenk (7, 8) an einem Ende der Untersetzungsstange (9) und deren anderes Ende über ein Kugelgelenk (11) am Wechselgetriebe angelenkt ist.

4. Vorrichtung gemäß einem der vorstehenden Ansprüche, dadurch gekennzeichnet, daß der Handschalthebel (1) über ein Kugelgelenk (2) und einen elastischen Schwingungsdämpferblock (3) am Rahmen oder an der Karosserie des Fahrzeugs angebracht ist.

5. Vorrichtung gemäß einem beliebigen der vorstehenden Ansprüche, dadurch gekennzeichnet, daß die Schaltstange (6) im wesentlichen in Längsrichtung des Fahrzeugs verläuft und die Untersetzungsstange (9) im wesentlichen senkrecht dazu verläuft.

6. Vorrichtung gemäß Anspruch 5, dadurch gekennzeichnet, daß das Ende des Handschalthebels (1) quer zum Ende der Untersetzungsstange (9) verschoben wird.

## Claims

1. Manual device for controlling the selection of the gear ratios of a gearbox of a motor vehicle, incorporating a control lever operated manually (1) provided with a fixed point of articulation (2), a selector finger for selecting the gears 12 mounted inside the gearbox and capable of being subjected to a rotary movement about a control shaft (13) and a movement in translation along the said shaft and a selector rod (6) connected at one of its ends by a joint (4, 5) with one degree of freedom of movement to the hand lever (1) so as to transmit the movements of the hand lever (1) to the selector finger (12), characterised in that the selector rod (6) is joined at its other end, by a joint with one degree of freedom in rotation (7, 8) to a reduction device (9, 16, 14) mounted at least partially inside the gear-box, the fixed point of articulation (2) of the hand lever (1) being positioned on the said lever in such a way that the reduction due to the hand lever is of the order of 1.5, the complete device resulting in an overall reduction of the order of 6 to 7.

2. Device according to Claim 1, characterised in that the reduction device incorporates a reduction rod (9) fixed to the gearbox through a ball joint (11) and an output lever (14) firmly fixed to the control shaft (13) of the selector finger (12), jointed at a point (16) which is adjustable by sliding on the reduction rod (9).

3. Device according to Claim 1 or Claim 2, characterised in that the selector rod (6) is connected by a joint (7, 8) to one of the ends of the reduction rod (9) whose other end is fixed to the gearbox through a ball joint (11).

4. Device according to one of the preceding claims, characterised in that the hand lever (1) is mounted on the chassis or the body of the vehicle through a ball joint (2) and an elastic block (3) for absorbing vibrations.

5. Device according to any one of the preceding claims, characterised in that the selector rod (6) is essentially situated in the longitudinal direction of the vehicle, the reduction rod (9) being essentially at right angles to it.

6. Device according to Claim 5, characterised in that the end of the hand lever (1) is offset transversely relative to the end of the reduction rod (9).

FIG.1

FIG.2

FIG.3